# EUROPEAN PATENT SPECIFICATION

(11) **EP 2 672 066 B1**
(45) Date of publication and mention of the grant of the patent: **02.03.2016**
(21) Application number: 13170968.5
(22) Date of filing: 07.06.2013
(51) Int. Cl.: F01D 5/14, F01D 5/28, F04D 29/32

(54) **Mechanical interlock for a multi-material airfoil**
Mechanische Verbindung für eine aus mehreren Werkstoffen bestehende Schaufel
Jonction mécanique pour une aube à matériaux multiple

(30) Priority: 08.06.2012 US 201213492130
(43) Date of publication of application: 11.12.2013
(73) Proprietor: General Electric Company, Schenectady, NY 12345 (US)
(72) Inventor: Kray, Nicholas Joseph, Mason, OH Ohio 45040 (US); Shah, Pranav Dhoj, Clifton Park, NY New York 12065 (US); Shim, Dong-Jin, Cohoes, NY New York 12047 (US)
(74) Representative: Williams, Andrew Richard

(56) References cited:
- EP-A2- 0 786 580
- DE-A1- 1 551 176
- DE-A1- 19 963 714
- US-A1- 2007 020 105
- US-A1- 2008 187 441
- US-B1- 6 413 051

## Description

Present embodiments generally relate to gas turbine engines. More particularly, but not by way of limitation, present embodiments relate to apparatuses and methods for providing a mechanical interlock feature for multi-material airfoils.

In turbine engines, air is pressurized in a compressor and mixed with fuel in a combustor for generating hot combustion gases which flow downstream through turbine stages. These turbine stages extract energy from the combustion gases. A high pressure turbine includes a first stage nozzle and a rotor assembly including a disk and a plurality of turbine blades. The high pressure turbine first receives the hot combustion gases from the combustor and includes a first stage stator nozzle that directs the combustion gases downstream through a row of high pressure turbine rotor blades extending radially outwardly from a first rotor disk. In a two stage turbine, a second stage stator nozzle is positioned downstream of the first stage blades followed in turn by a row of second stage turbine blades extending radially outwardly from a second rotor disk. The stator nozzles direct the hot combustion gases in a manner to maximize extraction at the adjacent downstream turbine blades.

The first and second rotor disks are joined to the compressor by a corresponding rotor shaft for powering the compressor during operation. These are typically referred to as the high pressure turbine. The turbine engine may include a number of stages of static airfoils, commonly referred to as vanes, interspaced in the engine axial direction between rotating airfoils commonly referred to as blades. A multi-stage low pressure turbine follows the two stage high pressure turbine and is typically joined by a second shaft to a fan disposed upstream from the compressor in a typical turbofan aircraft engine configuration for powering an aircraft in flight.

As the combustion gases flow downstream through the turbine stages, energy is extracted therefrom and the pressure of the combustion gas is reduced. The combustion gas is used to power the compressor as well as a turbine output shaft for power and marine use or provide thrust in aviation usage. In this manner, fuel energy is converted to mechanical energy of the rotating shaft to power the compressor and supply compressed air needed to continue the process.

One desirable characteristics or design of gas turbine engines is to improve performance of airfoil structures. This may occur in a variety of fashions. One manner of improving airfoil performance is utilizing multi-material designs for the airfoil. This would allow specific benefit of differing moduli, density or ductility. It additionally allows optimization for extreme loading conditions such as impact conditions. However, while use of multi-materials would be desirable, the joining of these multi-materials via legacy techniques such as welding is often not possible based on the materials themselves. Other options such as traditional bond joints can be investigated. These typical bond or lap joints involve material interfaces that transfer load thru a bond shear interface. However, it is desirable to improve the typical shear or lap joints which are adhesively bonded together. It would further be desirable to improve the interface strength of the materials being combined to form the airfoil.

As may be seen by the foregoing, there is a need to optimize performance of airfoils. Additionally, there is a need to optimize blade designs to include lighter weight materials while providing requisite strength features needed for blades, airfoils and like components of a turbine engine or other construct using an airfoil design.

US 6,413,051 B1 relates to an article including a laminated end portion with a discrete end barrier and method of making the same and discloses first and second airfoil portions connected to each other along a generally linear connection surface.

The present invention provides a mechanical interlock for a multi-material airfoil in accordance with the appended claims.

Some exemplary embodiments of the present disclosure involve a multi-material airfoil comprising a first airfoil portion connectable to a rotor disk, the first airfoil portion being formed of a first material, the first airfoil portion having an interlock feature extending therefrom, a second airfoil portion connected to the interlock feature of the first airfoil portion, the second airfoil portion extending from the first airfoil portion in a radial direction, the second airfoil portion formed of at least a partially dissimilar material.

According to some exemplary embodiments, a mechanical interlock for a multi-material airfoil comprises a leading edge, a trailing edge, a shank end and an opposed tip, a parent connectable to a rotor disk, the parent being formed of a first material and having an interlock feature extending in a radial upward direction, a wrap being formed of at least a partially different material than the first material, the wrap defining the opposed tip, the wrap having a cavity for receiving the interlock feature, the wrap extending from the parent in a radial direction.

According to still other exemplary embodiments, a mechanical interlock for a multi-material airfoil comprises a first airfoil portion formed of a first material and having an interlock feature extending in a radially upward direction, a second airfoil portion formed of a second material wherein the second material is at least partially different than the first material, the second airfoil portion extending from the first airfoil portion in a radial direction, the second airfoil portion having a cavity receiving the interlock feature, the first airfoil and the second airfoil portions defining an interlock region wherein the interlock feature and the interlock cavity are disposed.

All of the above outlined features are to be understood as exemplary only and many more features and objectives of the interlock feature of the multi-material airfoil may be gleaned from the disclosure herein. Therefore, no limiting interpretation of this summary is to be understood without further reading of the entire specification, claims, and drawings included herewith.

The above-mentioned and other features and advantages of this disclosure, and the manner of attaining them, will become more apparent and the shape changing airfoil will be better understood by reference to the following description of exemplary embodiments taken in conjunction with the accompanying drawings, wherein:
FIG. 1 is a side-section small view of an exemplary turbine engine.
FIG. 2 is a side view of a fan rotor assembly.
FIG. 3 is a section view of the exemplary multi-material airfoil with an interlock feature.
FIG. 4 is an isometric view of an exemplary parent portion of the multi-material airfoil.
FIG. 5 is a section view of an exemplary multi-material airfoil with interlock feature.
FIG. 6 is a side view of an exemplary interlock feature further depicting fibrous material used to form the interlock features.

Reference now will be made in detail to embodiments provided, one or more examples of which are illustrated in the drawings. Each example is provided by way of explanation, not limitation of the disclosed embodiments. In fact, it will be apparent to those skilled in the art that various modifications and variations can be made in the present embodiments without departing from the scope of the disclosure. For instance, features illustrated or described as part of one embodiment can be used with another embodiment to still yield further embodiments. Thus it is intended that the present invention covers such modifications and variations as come within the scope of the appended claims and their equivalents.

Present embodiments provide an airfoil which may be formed of various layers of material. For example, one material may be a polymeric matrix composite (PMC). According to a second embodiment, the material may be a ceramic matrix composite (CMC). Other materials may be used, as described further herein, such as carbon based materials, for example, and therefore the description should not be considered limiting.

The terms fore and aft are used with respect to the engine axis and generally mean toward the front of the turbine engine or the rear of the turbine engine in the direction of the engine axis, respectively. The term radially is used generally to indicate a direction perpendicular to an engine axis.

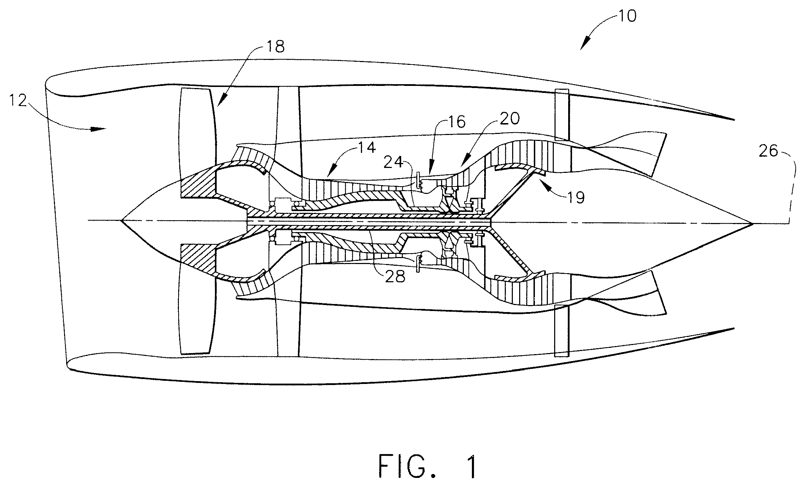

Referring now to FIGS. 1-6, various embodiments depict apparatuses and methods for providing for a mechanical interlock feature for multi-material airfoil. The airfoil may use any plurality of locations of a turbine engine including, but not limited to the turbine, compressor, turbofan, and other locations. Additionally, the multi-material is also utilized in other airfoil embodiments such as wing, blade, propeller or other locations on an airplane, wind turbine or marine or industrial use.

Referring initially to FIG. 1, a schematic side section view of a gas turbine engine 10 is shown having an engine inlet end 12, a compressor 14, a combustor 16 and a multi-stage high pressure turbine 20. The gas turbine engine 10 may be used for aviation, power generation, industrial, marine or the like. Depending on the usage, the engine inlet end 12 may alternatively contain multi-stage compressors rather than a fan. The gas turbine 10 is axis-symmetrical about engine axis 26 or high pressure shaft 24 so that various engine components rotate thereabout. In operation air enters through the air inlet end 12 of the engine 10 and moves through at least one stage of compression where the air pressure is increased and directed to the combustor 16. The compressed air is mixed with fuel and burned providing the hot combustion gas which exits the combustor 16 toward the high pressure turbine 20. At the high pressure turbine 20, energy is extracted from the hot combustion gas causing rotation of turbine blades which in turn cause rotation of the shaft 24. The shaft 24 passes toward the front of the engine to continue rotation of the one or more compressor stages 14, a turbo fan 18 or inlet fan blades, depending on the turbine design.

The axisymmetrical shaft 24 extends through the turbine engine 10, from the forward end to an aft end. The shaft 24 is supported by bearings along its length. The shaft 24 may be hollow to allow rotation of a low pressure turbine shaft 28 therein. Both shafts 24, 28 may rotate about the centerline or axis 26 of the engine. During operation the shafts 24, 28 rotate along with other structures connected to the shafts such as the rotor assemblies of the turbine 20 and compressor 14 in order to create power or thrust depending on the area of use, for example power, industrial or aviation.

Referring still to FIG. 1, the inlet 12 includes a turbofan 18 having a plurality of blades. The turbofan 18 is connected by shaft 28 to the low pressure turbine 19 and creates thrust for the turbine engine 10. Although discussed with respect to the various blades of the turbine 19, the multi-material airfoil may be utilized with various airfoils within the turbine engine 10. Additionally, the multi-material blade may be utilized with various airfoils associated with structures other than the turbine engine as well.

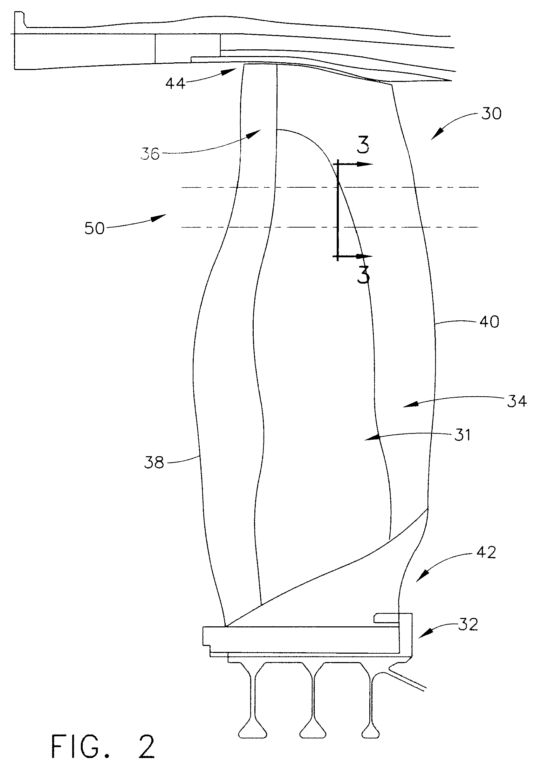

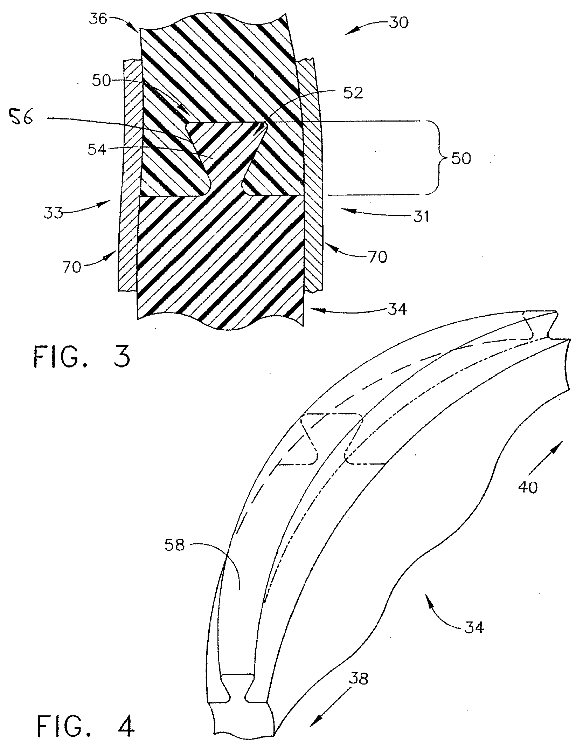

Referring now to FIG. 2, a side view of a single fan blade 30 is depicted connected to a rotor disc 32. Although a fan blade is shown and described, other components utilized in the airfoil shape may utilize the described multi-material interlock feature 52 (FIG. 3). The fan blade or airfoil further includes a parent material or a first portion 34 and a wrap material or second portion 36. The rotor disc 32 is connected to a shaft, such as a high pressure shaft 24 (FIG. 1) or a low pressure shaft 28 (FIG. 1). The rotor disc 32 rotates with the rotation of the shaft causing rotation of the airfoils 30. The blade or airfoil 30 includes a root portion which is connected to a, for example, rotor assembly within the compressor 20, the turbofan 18 or the turbine 20 of the turbine engine 10. For example, the root may be received in the cavity of a rotor disk 32 or may utilize other mechanical connection with the rotor.

Extending from the rotor disc 32 in a radial direction is the parent material or first portion 34. The parent includes a shank or lower end which is connected to the rotor disc 32 by the root. The parent material 34 may be formed from various materials such as metallic or composite material. The term composite material is defined to be a material having any (metal or non-metal) fiber filament embedded in any (metal or non-metal) matrix binder. The composite material is comprised of fiber filaments embedded in an epoxy (i.e. epoxy resin) matrix binder. Other choices for the fiber filaments in the composite material include, but are not limited to, glass fibers, aramid fibers, carbon fibers, and boron fibers and combinations thereof. Other choices for the matrix resin include, but are not limited to, bismaleimide, polyimide, polyetherimide, polyetherketone, poly(aryl sulfone), polyethersulfone and cyante ester and combinations thereof. The matrix may additionally include other materials to toughen or strengthen the final material. The airfoil 30 may be formed with multiple layers of composite material which build upon one another to form the desired shape of the airfoil 30. Although a number of layers are shown in the depicted embodiment, more layers or fewer layers may be utilized. According to one embodiment, the airfoil 30 may be formed of for example a polymeric matrix composite (PMC). According to other embodiments, carbon fibers, glass fibers or some combination thereof may be utilized and may be laid in the chordwise, spanwise, oblique directions or combinations thereof through each or multiple layers.

The wrap material 36 may be formed of castable material, such as castable foam, composite material or polyurethane. The wrap may for instance use any of the above listed materials as used with the parent material 34. These parent 34 and wrap 36 materials are however at least partially dissimilar and may be completely dissimilar. An interlock region 50 is found between the parent 34 and wrap 36 where the parent 34 and wrap 36 materials join together. The interlock region 50 is depicted between the broken lines in FIG. 2.

The airfoil 30 further includes a pressure side 31 and a suction side 33 (FIG. 3) wherein the distance from a leading edge 38 to a trailing edge 40 across the suction side is typically longer than the distance from the leading edge to the trailing edge 32 across the pressure side. In a gas turbine compressor application, the turbine blade 30 rotates in a direction such that the pressure side passes a reference point before the suction side passes the same reference point. In a steam turbine application the airfoil may rotate in a direction such that the suction side passes a reference point before the pressure side passes the same reference point.

The fan blade 30 further comprises a leading edge 38, an interlock region 50 for the pressure blade 30 extends from a lower end or shank 42 near the rotor disc 32 upward to the lip or end 44 of the fan blade. The fan blade 30 may be solid, hollow, partially hollow, in whole or in part with some low density materials. The interlock region 50 defines an area where a mechanical interlock feature extends from the parent material 34 to the wrap material 36.

Referring now to FIG. 3, a section view of the fan blade 30 is depicted in the interlock region 50 is clearly shown in a direction perpendicular to that shown in FIG. 2. The fan blade 30 depicts the parent material 34 and the wrap material 36 as well as the interlock region 50. Within the interlock region 50, an interlock feature 52 is provided. According to one exemplary embodiment, the interlock feature 52 comprises an inverted dovetail 54 extending radially upwardly from the parent 34. The inverted dovetail 54 is integrally formed with the parent 34 and the wrap 36 comprises a cavity 56 which is integrally formed to receive the interlock feature 52. The cavity 56 may have a corresponding shape to that of the interlock feature 52. Accordingly, as shown in the exemplary embodiment, the cavity 56 also comprises a female inverted dovetail shape to receive the corresponding male feature of the parent 34.

As additionally shown in FIG. 3, a cladding 70 is utilized on either or both sides of the blade. The cladding 70 may be formed of various materials which are similar or dissimilar from the parent 34 and the wrap 36. The cladding 70 may be attached by fastening, adhesives or various other manners. Additionally, it should be understood that the cladding 70 is optional and therefore may or may not be utilized depending on the application.

Referring now to FIG. 4, an isometric view of a parent 34 as seen from the leading edge 38 to trailing edge 40. The interlock feature 52 is shown having an upper thickness 58 which varies between the leading edge 38 and the trailing edge 40. The thickness at 58 may be engineered depending on the anticipated loading occurring along the point of the parent material at the interlock region 50 (FIG. 3). The thickness 58 may vary also with the curvature of the blade 30.

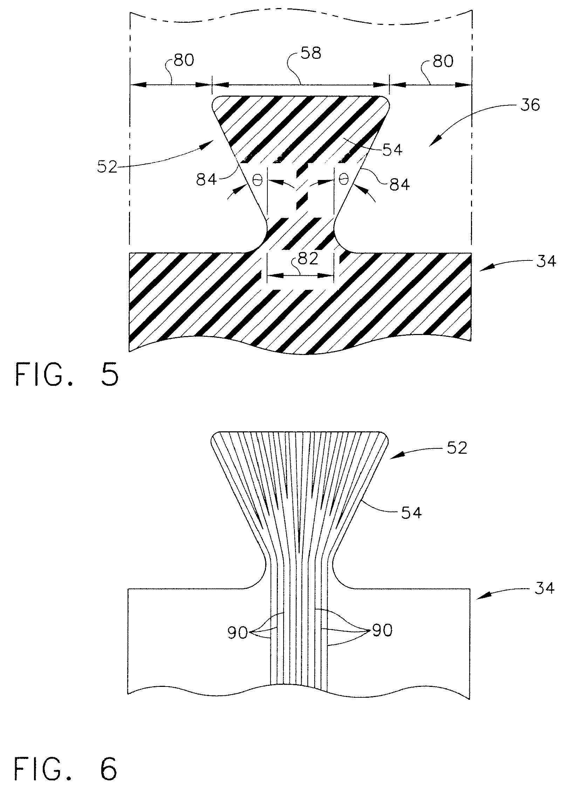

Referring now to FIG. 5, a sectional view of the parent 34 is depicted with the wrap 36 shown in broken line. The mechanical interlock feature 52, comprises the exemplary inverted dovetail 54. In this view various design parameters are depicted around the interlock feature 52. As previously described, width or thickness 58 may vary between the leading edge 38 and trailing edge 40 of the blade 30 or parent 34. Adjacent dimension 80 may be designed based on the total weight of the wrap material 36. Similarly, angled surfaces 84, having angles theta (θ), are shown extending from the lower portion of the interlock feature 52 and measured from a vertical line shown adjacent each of these surfaces. Angle theta (θ) is sized to allow for greatest shear interface load between the parent 34 and the wrap 36. A neck thickness 82 is shown at the bottom of the dovetail which is also sized based on total weight of the wrap material 36 under a rotational load. Specific sizing of the interlock angles and resulting thicknesses will be material dependent such as to utilize each materials capability. The interlock feature 52 may be formed by continuously adding layers of composite material to build the inverted dovetail 54, for example, to a desired size.

Referring now to FIG. 6, an additional side sectional view of the parent material 34 is depicted. One feature utilized at the instant embodiment may be continuous fibers 90 extending from the parent material 34 into the interlock feature 52. The continuous fibers 90 extending from the parent material 34 into the interlocking feature 52 increase shear strength and tensile strength for the interlock feature 52, which in some embodiments comprises the inverted dovetail 54.

While multiple inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the invent of embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the appended claims and equivalents thereto, inventive embodiments may be practiced otherwise than as specifically described and claimed.

Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

Examples are used to disclose the embodiments, including the best mode, and also to enable any person skilled in the art to practice the apparatus and/or method, including making and using any devices or systems and performing any incorporated methods. These examples are not intended to be exhaustive or to limit the disclosure to the precise steps and/or forms disclosed, and many modifications and variations are possible in light of the above teaching. Features described herein may be combined in any combination. Steps of a method described herein may be performed in any sequence that is physically possible.

All definitions, as defined and used herein, should be understood to control over dictionary definitions, definitions in documents incorporated by reference, and/or ordinary meanings of the defined terms. The indefinite articles "a" and "an," as used herein in the specification and in the claims, unless clearly indicated to the contrary, should be understood to mean "at least one." The phrase "and/or," as used herein in the specification and in the claims, should be understood to mean "either or both" of the elements so conjoined, i.e., elements that are conjunctively present in some cases and disjunctively present in other cases.

It should also be understood that, unless clearly indicated to the contrary, in any methods claimed herein that include more than one step or act, the order of the steps or acts of the method is not necessarily limited to the order in which the steps or acts of the method are recited.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively.

## Claims

1. A mechanical interlock for a multi-material airfoil (30), comprising:
a first airfoil portion (34) connectable to a rotor disk (32), said first airfoil portion being formed of a first material;
said first airfoil portion having an interlock feature (52) extending radially therefrom;
a second airfoil portion (36) connected to said interlock feature of said first airfoil portion, said second airfoil portion extending from said first airfoil portion in a radial direction;
said second airfoil portion formed of at least a partially dissimilar material; wherein said first material is a first composite.
wherein said interlock feature (52) is an inverted dovetail (54), said inverted dovetail having a varying thickness (58) between a leading edge and a trailing edge of said airfoil (30).

2. The mechanical interlock of Claim 1, wherein said first material includes a plurality of continuous fibers (90) extending from a lower portion (34) of said first airfoil portion into said inverted dovetail (54).

3. The mechanical interlock of either of Claim 1 or 2, wherein said second airfoil portion (36) is a second composite dissimilar from said first composite.

4. The mechanical interlock of either of Claim 1 or 2, wherein said second airfoil portion (36) is one of a cast-able foam or a polyurethane.

5. The mechanical interlock of any one of the preceding Claims, further comprising a cladding material (70) overlapping said first airfoil portion (34) and said second airfoil portion (36).

6. A mechanical interlock for a multi-material airfoil of any of the preceding claims, comprising:
a shank end (42) and an opposed tip (44);
said first portion defining a parent (34);
said second portion defining a wrap (36), said wrap defining said opposed tip (44);
said wrap (36) having a cavity (56) for receiving said interlock feature (52);
said wrap extending from said parent in a radial direction.

7. The mechanical interlock of any of the preceding Claims, said inverted dovetail having angled surfaces (84).

8. The mechanical interlock of either of Claim 6 or 7 said parent (34) material and said wrap (36) material being differing materials.

9. The mechanical interlock of any one of Claims 6 to 8, further comprising a cladding (70) overlapping said parent (34) material and said wrap (36) material.

## Patentansprüche

1. Mechanische Verriegelung für multimaterialen Flügel (30), umfassend:
einen ersten Flügelteil (34), der mit einer Rotorscheibe (32) verbunden werden kann, wobei der erste Flügelteil aus einem ersten Material gebildet ist;
wobei der erste Flügelteil ein Verriegelungsmerkmal (52) hat, das sich radial von dort aus erstreckt;
einen zweiten Flügelteil (36), der mit dem Verriegelungsmerkmal des ersten Flügelteils verbunden ist, wobei sich der zweite Flügelteil vom ersten Flügelteil aus in radialer Richtung erstreckt;
wobei der zweite Flügelteil aus mindestens einem verschiedenen Material gebildet ist; wobei das erste Material ein erster Verbundwerkstoff ist,
wobei das Verriegelungsmerkmal (52) ein umgekehrter Schwalbenschwanz (54) ist, wobei der umgekehrte Schwalbenschwanz eine veränderliche Dicke (58) zwischen einer Vorderkante und einer Hinterkante des Flügels (30) hat.

2. Mechanische Verriegelung nach Anspruch 1, wobei das erste Material mehrere durchgehende Fasern (90) umfasst, die sich von einem unteren Teil (34) des ersten Flügelteils bis in den umgekehrten Schwalbenschwanz (54) erstrecken.

3. Mechanische Verriegelung nach Anspruch 1 oder 2, wobei der zweite Flügelteil (36) ein zweiter Verbundwerkstoff ist, der sich vom ersten Verbundwerkstoff unterscheidet.

4. Mechanische Verriegelung nach Anspruch 1 oder 2, wobei der zweite Flügelteil (36) aus einem Verbundwerkstoff ist, der entweder ein gießfähiger Schaum oder ein Polyurethan ist.

5. Mechanische Verriegelung nach einem der vorherigen Ansprüche, der ferner ein Hüllmaterial (70) umfasst, das den ersten Flügelteil (34) und den zweiten Flügelteil (36) überdeckt.

6. Mechanische Verriegelung für einen multimaterialen Flügel nach einem der vorherigen Ansprüche, umfassend:
ein Schaftende (42) und eine gegenüberliegende Spitze (44) ;
wobei der erste Teil einen Ausgangsteil (34) definiert;
wobei der zweite Teil eine Hülle (36) definiert, wobei die Hülle die gegenüberliegende Spitze (44) definiert;
wobei die Hülle (36) einen Hohlraum (56) zum Aufnehmen des Verriegelungsmerkmals (52) hat und die Hülle sich vom Ausgangsteil in einer radialen Richtung erstreckt.

7. Mechanische Verriegelung nach einem der vorherigen Ansprüche, wobei der umgekehrte Schwalbenschwanz abgewinkelte Flächen (84) hat.

8. Mechanische Verriegelung nach Anspruch 6 oder 7, wobei das Material des Ausgangsteils (34) und das Material der Hülle (36) unterschiedliche Materialien sind.

9. Mechanische Verriegelung nach einem der Ansprüche 6 bis 8, die ferner eine Umhüllung (70) hat, welche das Material des Ausgangsteils (34) und das Material der Hülle (36) überdeckt.

## Revendications

1. Jonction mécanique pour un profil aérodynamique à matériaux multiples (30), comprenant :
une première partie de profil aérodynamique (34) qui peut être raccordée à un disque de rotor (32), ladite première partie de profil aérodynamique étant formée d'un premier matériau ;
ladite première partie de profil aérodynamique ayant une caractéristique de jonction (52) qui s'en étend radialement ;
une seconde partie de profil aérodynamique (36) raccordée à ladite caractéristique de jonction de ladite première partie de profil aérodynamique, ladite seconde partie de profil aérodynamique s'étendant de ladite première partie de profil aérodynamique dans la direction radiale ;
ladite seconde partie de profil aérodynamique étant formée d'au moins un matériau partiellement différent ; dans laquelle ledit premier matériau est un premier composite,
dans laquelle ladite caractéristique de jonction (52) est une queue d'aronde à l'envers (54), ladite queue d'aronde à l'envers ayant une épaisseur variable (58) entre un bord d'attaque et un bord de fuite dudit profil aérodynamique (30).

2. Jonction mécanique selon la revendication 1, dans laquelle ledit premier matériau comprend une pluralité de fibres continues (90) s'étendant d'une partie inférieure (34) de ladite première partie de profil aérodynamique dans ladite queue d' aronde à l'envers (54).

3. Jonction mécanique selon l'une ou l'autre de la revendication 1 et de la revendication 2, dans laquelle ladite seconde partie de profil aérodynamique (36) est un second composite différent dudit premier composite.

4. Jonction mécanique selon l'une ou l'autre de la revendication 1 et de la revendication 2, dans laquelle ladite seconde partie de profil aérodynamique (36) est un matériau choisi parmi une mousse coulable ou d'un polyuréthane.

5. Jonction mécanique selon l'une quelconque des revendications précédentes, comprenant en outre un matériau de placage (70) chevauchant ladite première partie de profil aérodynamique (34) et ladite seconde partie de profil aérodynamique (36) .

6. Jonction mécanique pour un profil aérodynamique à matériaux multiples selon l'une quelconque des revendications précédentes, comprenant :
une extrémité de queue (42) et une pointe opposée (44) ;
ladite première partie définissant un parent (34) ;
ladite seconde partie définissant un enroulement (36), ledit enroulement définissant ladite pointe opposée (44) ;
ledit enroulement (36) ayant une cavité (56) pour recevoir ladite caractéristique de jonction (52) ;
ledit enroulement s'étendant dudit parent dans la direction radiale.

7. Jonction mécanique selon l'une quelconque des revendications précédentes, ladite queue d'aronde à l'envers ayant des surfaces obliques (84).

8. Jonction mécanique selon l'une ou l'autre des revendications 6 et 7, le matériau dudit parent (34) et le matériau dudit enroulement (36) étant des matériaux différents.

9. Jonction mécanique selon l'une quelconque des revendications 6 à 8, comprenant en outre un placage (70) chevauchant le matériau dudit parent (34) et le matériau dudit enroulement (36).
